# EUROPEAN PATENT APPLICATION

(11) **EP 2 363 338 A1**
(43) Date of publication of application: **07.09.2011**
(21) Application number: 11156310.2
(22) Date of filing: 28.02.2011
(51) Int. Cl.: B62D 53/02, B62D 49/02, B62D 49/04, B62D 21/18, B62D 63/02

(54) **Work and industrial vehicle**

(30) Priority: 01.03.2010 ES 201000261
(71) Applicant: Garcia Arias, Juan Jose, 17480 Roses (ES)
(72) Inventor: Garcia Arias, Juan Jose, 17480 Roses (ES)
(74) Representative: Ponti Sales, Adelaida

(57) **Abstract**

Work and industrial vehicle, comprising driving wheels (4, 5) provided with a driving that can be made independent comprising an motor unit (2), which includes an oil hydraulic central and a plurality of operating modules (3, 31, 32, 33) interchangeable and detachably engaged to the motor unit (2) by engaging means.

The engaging means include a detachable joint (6) mechanically linking the motor unit and each operating module (3, 31, 32, 33) and a hydraulic engagement (8) hydraulically linking the motor unit (2) and each operating module (3, 31, 32, 33), for hydraulically feeding the driving wheels (5). The hydraulic engagement is preferably formed by "quick hitch links". It is applicable to work vehicles, industrial, agricultural or forestry.

## Description

The invention relates to a work, industrial, agricultural or forestry vehicle, of the kind that comprise driving wheels provided with traction that can be made independent and an oil hydraulic station for the production of pressurized fluid (hydraulic, pneumatic, etc.), for driving the rotation of at least some of the driving wheels.

### Background of the invention

There are currently known many types of machinery and vehicles, depending on the application of construction or industry, such as e.g. concrete mixers, forklifts, dumpers, rollers and compactors, loaders, rakes, trenchers, hammers, excavators, mowers, etc. These vehicles can be driven in many different ways: a conventional mechanical driving with two wheels or four wheels, from a central engine, or a driving with the so-called "driving wheels". In this latter case, the four (or more) wheels are provided with hydrostatic driving from a mainly hydraulic circuit, but it can also be pneumatic. These driving systems can be combined into devices in which some of the wheels are eventually or alternatively driven in rotation by mechanical driving means or by driving wheels.

In the case of vehicles with driving wheels, a specific and different vehicle is required for each construction or industrial application, do that the construction companies or industries that need this kind of vehicles are required to have a large fleet, with the corresponding logistical problems. The present invention is intended to provide a vehicle to fulfil this gap detected in the current art and allows to solve such logistical problems.

### Description of the invention

For this purpose, the object of the present invention is a work and industrial vehicle comprising driving wheels, with a new and functional concept, which is essentially characterized by the characterizing part of claim 1.

In claim 2 and in the following ones, some embodiments and variants and particular features of the work or industrial vehicle of the present invention are disclosed.

The people skilled in the art will understand that, thanks to innovative claimed features, the vehicle of the present invention can solve the logistical problem posed. For example, for a lot of applications a single motor unit and a corresponding multiplicity of operating modules (modules, mixers, forklifts, dumpers, rollers and compactors, loaders, rakes, trenchers, hammers, cutters, etc.) can be used. Furthermore, for example, a company might have a single motor unit and rent the module according to the particular needs in each case.

### Brief description of drawings

In the attached drawings, by way of example only, embodiments of the construction vehicles and industrial object of the present invention are shown. In the drawings:
Fig. 1 is a side elevation view, showing an example embodiment of the vehicle according to the present invention, in which the operating module is a loader;
Fig. 2 is a side elevation view, similar to Fig. 1, where the operating module is a dumper, for the same motor unit in the case of Fig. 1;
Fig. 3 is a side elevation view, similar to Fig. 1, with the same motor unit, but the operating module is a cement mixer;
Fig. 4 is a schematic top plan view, which shows the operating mode of the vehicle of the invention, according to a first variant of the engaging means with the motor unit and the operating module engaged;
Fig. 5 is a schematic view, similar to Fig. 4, but with the motor unit and the operating module disengaged;
Fig. 6 is a schematic top plan view, similar to Fig. 4, which shows the operating mode of the vehicle of the invention, a second variant of the coupling means, which operate by fitting, with the motor unit and the operating module engaged; and
Fig. 7 is a schematic view, similar to Fig. 6, but with the motor unit and the operating module disengaged.

### Detailed description of the drawings

In these drawings, it can be seen that the work and industrial vehicle 1, according to the present invention, comprises a motor unit 2, and an operating module 3, interchangeable and detachably engaged to the motor unit 2 by engaging means, whose composition and operation mode are explained below.

The motor unit 2 includes a thermal or electric engine (not shown), an oil hydraulic central (not shown) for the production of pressurized fluid (especially oil) and other conventional known elements required, such as a seat 9 or control and management elements (for example a steering wheel 10) and torque transmission devices.

Both the motor unit 2 as the operating module 3 comprise a pair of coaxial driving wheels, 4 and 5, respectively, driven by the pressurized fluid from the oil hydraulic central. Obviously, the invention is applicable to a different number of wheels.

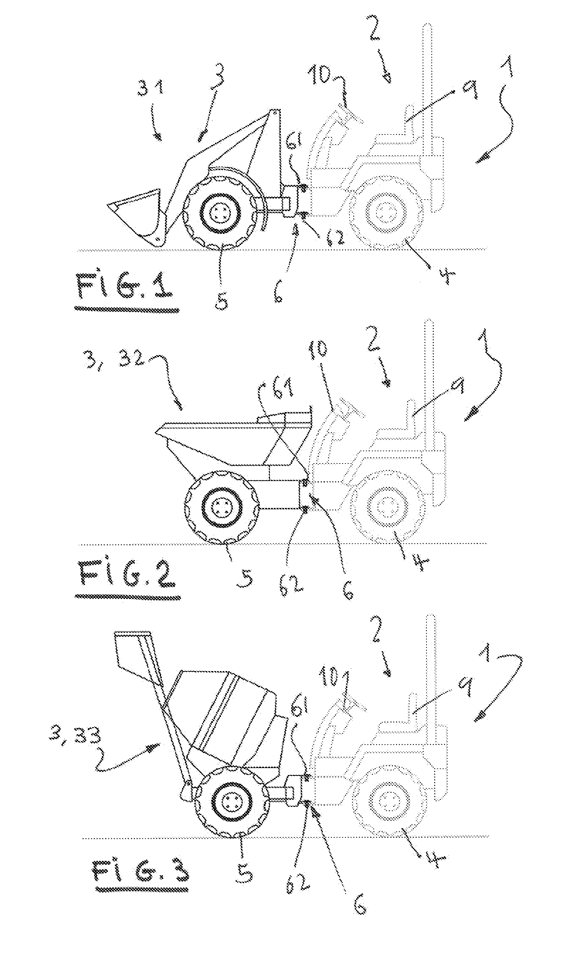

The operating module 3 can be selected from a plurality of operating modules 31, 32, 33, particular for each function, also detachably engaged to the motor unit 2, by way of example and not as a limitation, concrete mixers, forklifts, dumpers, rollers or compactors, loaders, rakes, trenchers, hammers, cutters, etc. can be cited. In Fig. 1 is shown an embodiment of the vehicle 1 of the present invention, in which the operating module 3 is a loader 31. In Fig. 2 it is a dumper and in Fig. 3 it is a mixer 33, engaged in each case to the same motor unit 2 of Fig. 1.

The engaging means comprise:
1. A detachable joint 6, mechanically linking the motor unit 2 to the operating modules 3, 31, 32, 33;
2. A hydraulic engagement 8 hydraulically linking the motor unit 2 and each operating module 3, 31, 32, 33, to hydraulically feed the driving wheels 5 of this latter, and their different implements, tools and accessories; and
3. A thrust mechanical engagement 7 to drive a movement of the operating modules 3, 31, 32, 33 with respect to the motor unit 2.

In Figs. 1 to 5 it can be seen that the detachable joint 6 comprises pins 61, 62 pivotally linking an end portion of the motor unit 2 with an adjacent end portion of the operating module 3, 31, 32, 33. There may be 2 or 3 degrees of freedom of rotation, as required by each particular application.

In another alternative embodiment of the detachable joint 6, which is not shown in the drawings, it could include a head, with 3 degrees of freedom. This plurality of degrees of freedom can overcome the obstacles of the terrain to the vehicle 1.

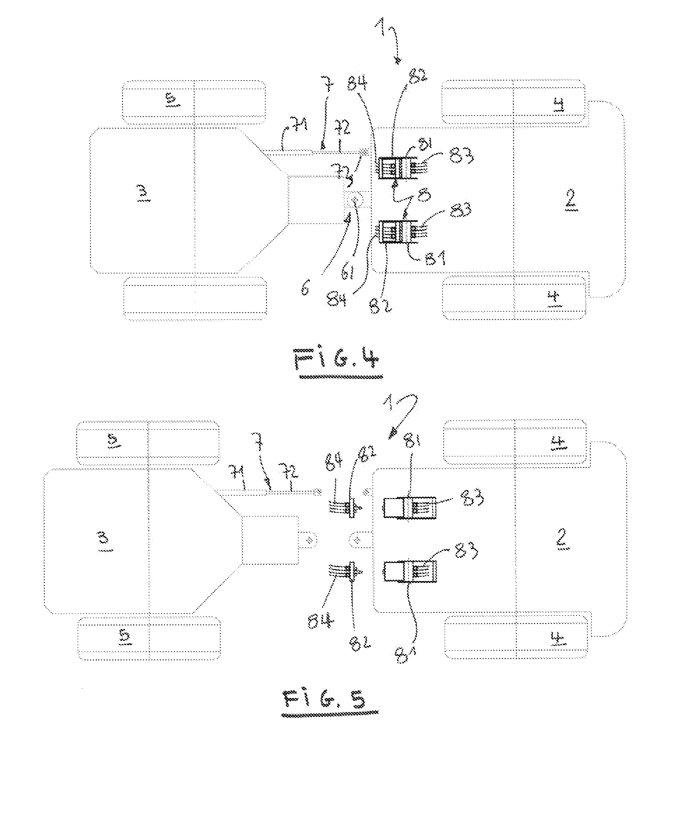

Regarding the hydraulic engagement 8, it preferably comprises hydraulic fittings to be connected to hydraulic hoses 83 of the motor unit 2 and to hydraulic pipes 84 of the operating module 3, 31, 32, 33, as shown in Figs. 4 and 5. These fittings can be provided with the type known commercially as "quick hitch links", which, according to the invention, comprise fixed heads 81 of the motor unit 2, hydraulically connected to the oil hydraulic central, and moving heads 82 of the operating module 3 , 31, 32, 33, connected hydraulically through corresponding hydraulic lines 84 with the driving wheels 5 of the operative modules 3, 31, 32, 33, and their different accessories and tools.

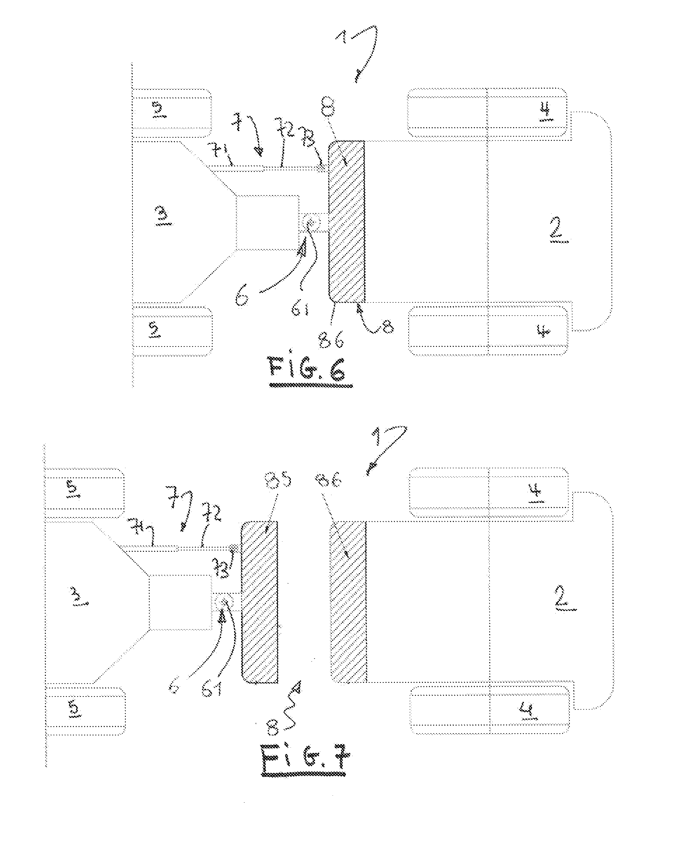

Figs. 6 and 7 illustrate an embodiment of the engaging means 8, comprising a fixed male connector 85 and a movable female connector 86, which operate in mutual collaboration by mutual engaging (or by plug). In this case, which is shown in Figs. 6 and 7, the joint 6 remains placed between the movable female connector 86 and the operating module 3.

Finally, as shown in Figs. 4 to 7, the thrust mechanical engagement 7 comprises a hydraulic or pneumatic actuator with a cylinder 71 and a push rod 72, which detachably links the motor unit 2 and the operating module 3; 31, 32, 33, and which is hinged at 73.

Those skilled in the art will understand that the principles of the present invention are applicable to all types of hydraulic fluids different from oil. For example, the driving system could be pneumatic or even electric, being both under the scope of protection of the claims.

Similarly, the present invention is applicable to all types of vehicles such as construction, industrial, agricultural or forestry.

## Claims

1. Work and industrial vehicle, comprising driving wheels provided with a driving that can be made independent and an oil hydraulic central for producing pressurized fluid causing the driving of at least some of the driving wheels (4, 5), **characterized in that** it comprises an motor unit (2), which includes said oil hydraulic central, and
a plurality of operating modules (3, 31, 32, 33) interchangeable and detachably engageable to the motor unit (2) by engaging means.

2. Work and industrial vehicle according to claim 1, wherein the engaging means comprise:
a detachable joint (6) mechanically linking the motor unit and each operating module (3, 31, 32, 33), and
an hydraulic engagement (8) hydraulically linking the motor unit (2) and each operating module (3, 31, 32, 33), for hydraulically feeding the driving wheels (5).

3. Work and industrial vehicle according to claim 2, wherein the engaging means further comprise:
a thrust mechanical engagement (7) for driving a movement of the operating modules (3, 31, 32, 33) with respect to the motor unit (2).

4. Work and industrial vehicle according to claim 2, wherein said detachable joint (6) comprises pins (61, 62) pivotally linking an end portion of the motor unit (2) with an adjacent end portion of the operating module (3; 31, 32, 33).

5. Work and industrial vehicle according to claim 2, wherein said detachable joint (6) includes hinges.

6. Work and industrial vehicle according to claim 2, wherein said hydraulic engagement (8) comprises hydraulic fittings to be connected to hydraulic hoses of the motor unit (2) and those of the operating module (3, 31, 32, 33).

7. Work and industrial vehicle according to claim 2, wherein said hydraulic engagement (8) comprises quick hitch links (8) for connecting the hydraulic hose to the motor unit (2) and those of the operating module (3, 31, 32, 33).

8. Work and industrial vehicle according to claim 7, wherein said quick hitch coupling (8) comprises fixed heads (81), integral with the motor unit (2), hydraulically linked to the oil hydraulic central, and movable heads (82), hydraulically linked to the driving wheels (5) of the operating module (3, 31, 32, 33).

9. Work and industrial vehicle according to claim 8, **characterized in that** the fixed head (81) is a fixed male connector (85), and the movable head (82) is a movable female connector (86), both cooperating in the connecting by mutual fitting, and leaving the joint (6) placed between the movable female connector (86) and the operating module (3).

10. Work and industrial vehicle according to claim 3, wherein said thrust mechanical engagement (7) comprises an hydraulic or pneumatic actuator cylinder (71) and a push rod (72), detachably linking the motor unit (2) and the operating module (3, 31, 32, 33).
